Europäisches Patentamt

European Patent Office

Office européen des brevets

(19)

(11) Veröffentlichungsnummer : **0 325 982 B1**

(12) **EUROPÄISCHE PATENTSCHRIFT**

(45) Veröffentlichungstag der Patentschrift :
**29.07.92 Patentblatt 92/31**

(51) Int. Cl.$^5$ : **H02P 7/62**

(21) Anmeldenummer : **89100663.7**

(22) Anmeldetag : **16.01.89**

(54) **Verfahren zur Bildung des Lastwinkel-Istwerts für eine feldorientiert geregelte Drehfeldmaschine und entsprechende Regelung.**

(30) Priorität : **29.01.88 DE 3802704**

(43) Veröffentlichungstag der Anmeldung :
**02.08.89 Patentblatt 89/31**

(45) Bekanntmachung des Hinweises auf die
Patenterteilung :
**29.07.92 Patentblatt 92/31**

(84) Benannte Vertragsstaaten :
**CH DE FR GB IT LI SE**

(56) Entgegenhaltungen :
**DE-A- 3 026 348**

(56) Entgegenhaltungen :
**DE-A- 3 034 275**
**SIEMENS FORSCHUNGS- UND ENTWICK-
LUNGSBERICHTE, Band 1, Nr. 1/72, 1972, Seiten 184-193, Springer Verlag, Berlin, DE;
F.BLASCHKE: "Das Verfahren der Feldorientierung zur Regelung der Asynchronmaschine"**

(73) Patentinhaber : **SIEMENS
AKTIENGESELLSCHAFT
Wittelsbacherplatz 2
W-8000 München 2 (DE)**

(72) Erfinder : **Reng, Leonhard, Dipl.-Ing.
Dr.-Wölfel-Strasse 4
W-8522 Herzogenaurach (DE)**

## Beschreibung

Die Erfindung betrifft ein Verfahren zur Bildung des Lastwinkel-Istwerts für eine feldorientiert geregelte Drehfeldmaschine sowie eine feldorientierte Regeleinrichtung für eine umrichtergespeiste Drehfeldmaschine mit den Merkmalen des Oberbegriffs des Anspruchs 2.

In "Siemens Forschungs- und Entwicklungsberichte", 1 (1972), Seiten 184 bis 193 ist erläutert, daß es für die Regelung einer drehzahlveränderlichen Drehstrommaschine vorteilhaft ist, in einem synchron mit der Feldachse rotierenden Koordinatensystem einen Sollstrom-Vektor vorzugeben, auf dessen Winkel dann der Winkel der rotierenden Feldachse mitgekoppelt wird, was einer Drehung des Sollstrom-Vektors um den Feldwinkel, d.h. eine Koordinatentransformation vom feldorientierten Koordinatensystem in das ständerorientierte Koordinatensystem, entspricht. Der dadurch gebildete ständerorientierte Sollstrom-Vektor wird dann über den Umrichter der Maschine eingeprägt.

Im Fall eines spannungseinprägenden Umrichters, z.B. eines Direktumrichters oder eines Zwischenkreisumrichters mit eingeprägter Zwischenkreis-Gleichspannung ist in Bild 16 vorgesehen, aus dem vorgegebenen Strom-Sollvektor in einem nachgeschalteten Entkoppel-Rechenwerk im feldorientierten Koordinatensystem die Bestimmungsgrößen eines feldorientierten Spannungs-Sollvektors zu bilden, der dann durch entsprechende Vektordrehung ins ständerorientierte Koordinatensystem transformiert wird, um die ständerorientierten Spannungs-Sollwerte für den Umrichter zu liefern.

Damit der den eingespeisten Phasenströmen entsprechende Strom-Istvektor, der von einem an die Maschine angeschlossenen Stromdetektor erfaßt werden kann, mit dem feldorientiert vorgegebenen Strom-Sollvektor zusammenfällt, ist eine Regeleinrichtung vorgesehen, die mit ihrem Sollwerteingang an die Eingabeeinrichtung für den feldorientierten Strom-Sollvektor und mit ihrem Istwerteingang (über einen Vektordreher zur Transformation vom Ständerbezugssystem ins Feldbezugssystem) an den Stromdetektor angeschlossen ist. Im bekannten Fall ist das vektorielle Ausgangssignal der Regeleinrichtung in die Entkopplungsschaltung eingespeist, um den zur Einprägung des feldorientierten Strom-Sollvektors erforderlichen Spannungs-Sollvektor zu bilden, der nach Transformation in Ständerkoordinaten den ständerorientierten Spannungs-Sollvektor zur Steuerung des Umrichters liefert.

Mit der Feldorientierung wird erreicht, daß die feldparallele und die feldsenkrechte Komponente des Strom-Sollvektors unabhängig voneinander der Maschine eingeprägt werden können. Mit der feldparallelen Komponente, die dem Feldstrom einer Gleichstrommaschine entspricht und gesteuert oder geregelt vorgegeben werden kann, kann somit der Fluß der Maschine auf einen gewünschten Wert eingestellt werden. Die feldsenkrechte Komponente gestattet das Drehmoment auf einen gesteuert oder (z.B. mittels eines Drehzahlreglers) geregelt vorgegebenen Sollwert einzuregeln.

Im bisher beschriebenen Fall der Stromeinprägung bei einem spannungseinprägenden Umrichter wurde eine Stromregelung für die beiden orthogonalen (kartesischen) Komponenten des Stromvektors benutzt. Man kann aber auch durch eine kartesisch/polare Koordinatenwandlung aus den feldorientierten Strom-Sollkomponenten dem Soll-Lastwinkel bilden und eine Regelung des Lastwinkels vornehmen, d.h. des Winkels zwischen dem Ständerstromvektor und dem Flußvektor (insbesondere dem Läuferflußvektor). Jedoch ist weder der Flußvektor selbst, noch der Winkel zwischen ihm und dem Ständerstromvektor einer direkten Messung zugänglich, sondern muß rechnerisch, z.B. über den Ständerspannungsvektor $\underline{U}^s$ und den Ständerstromvektor $\underline{I}^s$ errechnet werden.

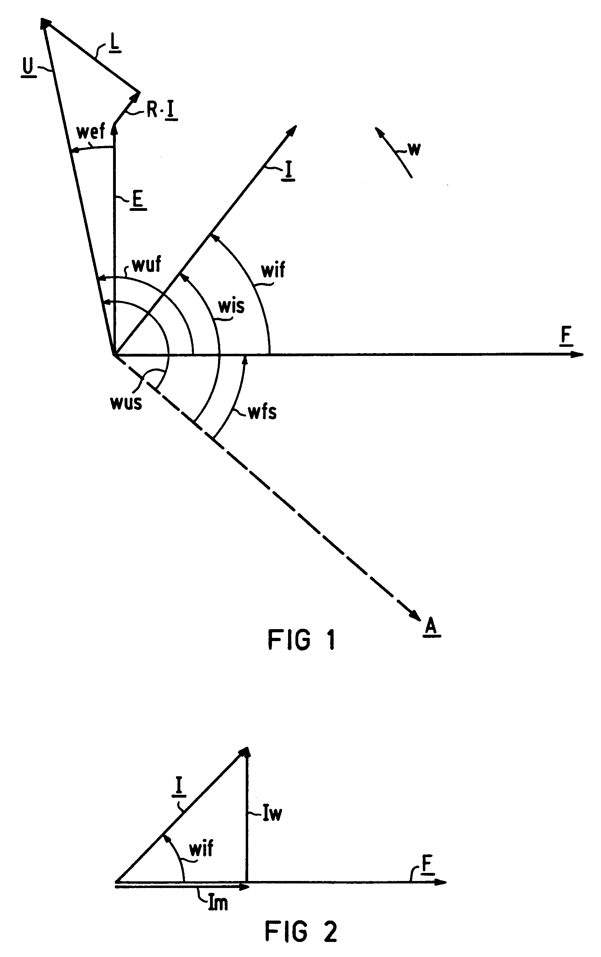

FIG 1 zeigt in einem orthogonalen Koordinatensystem, dessen eine Achse mit dem Flußvektor $\underline{F}$ zusammenfällt, den Ständerspannungsvektor $\underline{U}$ und den Ständerstromvektor $\underline{I}$. Mit $\underline{A}$ ist die Ständerachse bezeichnet, die somit das ruhende Ständerbezugssystem festlegt, in dem der vom Stromrichter eingespeiste Iststrom-Vektor $\underline{I}$ und der Spannungsvektor $\underline{U}$ gemessen werden können. Der mit der Frequenz w umlaufende Flußvektor $\underline{F}$ schließt somit mit der Ständerachse $\underline{A}$ den Winkel wfs ein, wobei gilt w = d (wfs)/dt.

In FIG 1 sind ferner die Winkel wis und wus dargestellt, die von den Vektoren $\underline{I}$ und $\underline{U}$ mit der Ständerachse $\underline{A}$ eingeschlossen werden. Mit wif und wuf sind die entsprechenden Winkel bezüglich der Feldachse $\underline{F}$ bezeichnet.

FIG 2 zeigt den Stromvektor $\underline{I}$ bezüglich der Feldachse $\underline{F}$ und dessen Zerlegung in die feldparallele Komponente $I_m$, die im stationären Zustand entsprechend der Induktivität des Läufers proportional zum Fluß ist. $I_w$ bezeichnet die feldsenkrechte, das Drehmoment bestimmende Stromkomponente, wobei gilt $I_w = |\underline{I}| \cdot \sin(wif)$ und $I_m = |\underline{I}| \cdot \cos(wif)$.

Zwischen dem Flußvektor $\underline{F}$ und dem vom Fluß induzierten EMK-Vektor $\underline{E}$ gilt die Beziehung $\underline{E} = d(\underline{F})/dt$, wobei der EMK-Vektor $\underline{E}$ aus dem Ständerspannungsvektor $\underline{U}$ durch Subtraktion des Vektors $R \cdot I$ für den ohmschen Spannungsabfall im Ständer und eines Vektors $\underline{L}$ hervorgeht, der zum Stromvektor $\underline{I}$ senkrecht steht und für den gilt $|\underline{L}| = L \cdot w \cdot |\underline{I}|$, wobei L der Streuinduktivitätsparameter ist.

Es ist also z.B. möglich, in einem Modell der Maschine aus den Parametern R und L sowie den Vektoren

$\underline{U}$ und $\underline{I}$ die Vektoren $\underline{E}$ und $\underline{F}$ zu berechnen, so daß auch der Feldwinkel wfs errechnet werden kann. Damit ergibt sich der Lastwinkel

$$wif = wis - wfs,$$

der durch die feldorientierte Regelung der Maschine eingeprägt werden soll.

Die Phase der eingespeisten Spannung, d.h. der Winkel wus, ist direkt meßbar und kann bei spannungseinprägenden Umrichtern, deren Steuersatz mit einem entsprechenden Signal arbeitet, auch direkt am Steuersatz abgegriffen werden. Daher wird häufig ein vereinfachtes Regelkonzept angewendet, in dem der Strom nicht auf den Flußvektor, sondern auf den Spannungsvektor orientiert wird. Der entsprechende Orientierungs-Fehlwinkel wef ist in FIG 1 ebenfalls dargestellt und beruht hauptsächlich auf der Vernachlässigung des Streuspannungsabfalls. Dieser steigt aber monoton mit der Belastung, so daß die Fehlsteuerung entsprechend wächst. Bei Arbeitspunkten großer Belastung kann man eine verbesserte Näherung erhalten, wenn man für große Winkel wif den Wirkstrom Iw ungefähr gleich dem Strombetrag $|\underline{I}|$ setzt.

Der Erfindung liegt die Aufgabe zugrunde, bei einer Lastwinkelregelung den Lastwinkel wif auf möglichst einfache Weise, insbesondere ohne Verwendung eines die elektrischen Istwerte der Maschine verarbeitenden Maschinenmodells, zu ermitteln.

Die Erfindung geht dabei davon aus, daß im Entkopplungsrechenwerk, das für die feldorientierte Regelung einer Drehfeldmaschine mit einem spannungseinprägenden Umrichter ohnehin erforderlich ist, der feldorientierte Spannungs-Sollwert wuf*, d.h. der Sollwert für den Winkel wuf, zur Verfügung steht und andererseits der ständerorientierte Spannungs-Istwinkel wus leicht verfügbar ist. Setzt man daher in der Winkelbeziehung wfs = wus - wuf anstelle des Istwinkels wuf den Sollwert wuf* ein, so ergeben sich für den Feldwinkel wfs und den Lastwinkel wif die Beziehungen

$$wif = wis - wfs,$$
$$wfs = wus - wuf*.$$

Dies führt zu einem Verfahren mit den Merkmalen des Anspruchs 1 und einer Regelung mit den Merkmalen des Anspruchs 2. Anhand von einer weiteren Figur soll die Erfindung näher erläutert werden.

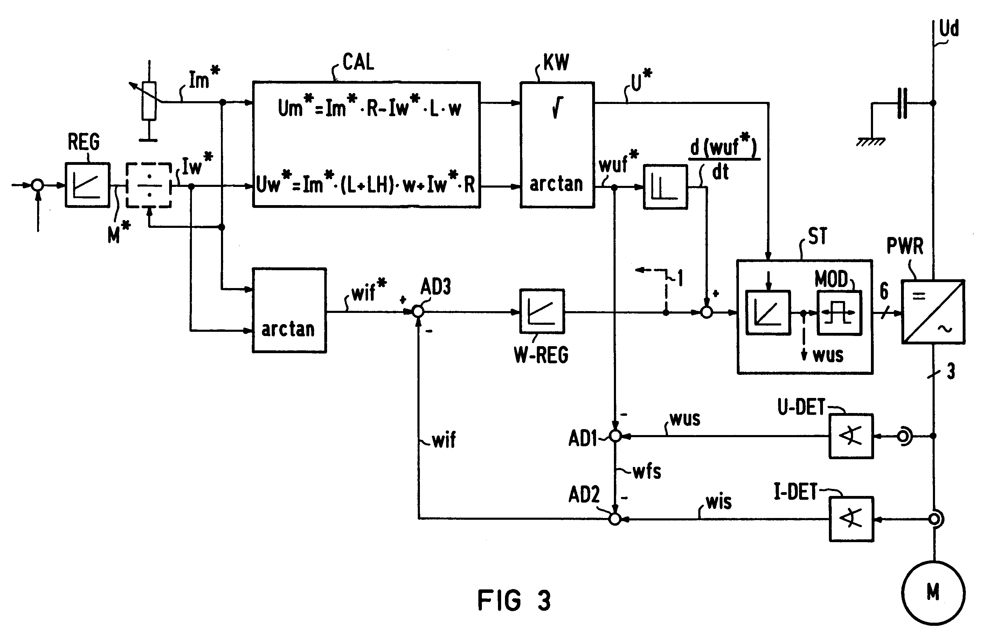

In dieser FIG 3 wird die Drehfeldmaschine M von einem Pulswechselrichter PWR gespeist, der an eine Versorgungsgleichspannung Ud angeschlossen ist. Der Umrichter PWR erhält die Ansteuerimpulse für seine Ventile von einem Steuersatz ST, der im dargestellten Fall einen Frequenzeingang und einen Betragseingang hat, um durch Integration der Frequenz und Multiplikation mit dem Betrag Referenzkurven für die Phasenspannungen der Maschine zu bilden, die anschließend in einem Modulator MOD pulsbreitenmoduliert werden.

Für die Ansteuerung des Steuersatzes ST wird ein feldorientierter Strom-Sollvektor $\underline{I}*$ an einer Eingabeeinrichtung in Form von zwei orthogonalen Stromkomponenten-Sollwerten vorgegeben. Der Sollwert Im* für die zur Feldachse parallele Komponente kann z.B. an einem Potentiometer abgegriffen werden und ist proportional zum Betrag des gewünschten Flusses.

Da das Drehmoment M proportional dem vektoriellen Produkt aus Fluß und Strom ist, kann der feldsenkrechte Komponentensollwert Iw* als Quotient eines Momentensollwertes M* und des Flusses aus dem Ausgangssignal eines Drehzahlreglers REG gebildet werden, der aus der Regelabweichung des Drehzahlistwertes von einem vorgegebenen Drehzahlsollwert das Soll-Drehmoment M* bestimmt, das zur Aufrechterhaltung des Drehzahlsollwertes benötigt wird. Als Ersatz-Drehzahlistwert kann dabei auch die Frequenz des Umrichters am Steuersatz abgegriffen und rückgeführt werden (Leitung 1).

Unter Berücksichtigung von Parametern für den Ständerwiderstand R, die Streuinduktivität L und die Hauptinduktivität kann ein Entkopplungsrechner, der ein Modell der Maschine darstellt, den zum Strom-Sollvektor $\underline{I}*$ gehörenden Stromspannungsvektor $\underline{U}*$ berechnen. Vorteilhaft werden dabei nur die stationären Beziehungen zwischen Strom und Spannung berücksichtigt, wie sie in FIG 1 dargestellt sind. Danach ergibt sich für die feldparallele Komponente Um* des entsprechenden Spannungs-Sollvektors $\underline{U}*$ und die feldsenkrechte Komponente Uw* dieses Sollvektors:

$$Um* = R . Im* - L . w . Iw*$$
$$Uw* = (L + LH) . w . Im* + R . Iw*.$$

Dabei ist LH die Hauptinduktivität, L die Streuinduktivität und R der Ständerwiderstand der Maschine. Die Größe w gibt an sich die in FIG 1 dargestellte Flußfrequenz an, die z.B. aus dem Ausgangssignal des Addierers AD1 durch Differenzieren gebildet werden kann. Die Feldfrequenz ist aber praktisch gleich der Umrichterfrequenz selbst und kann daher auch vom Frequenzsteuereingang des Steuersatzes ST rückgeführt werden.

Ein Koordinatenwandler KW transformiert die kartesischen feldorientierten Komponenten Um*, Uw* in die polare Betragskomponente $U* = (Uw*^2 + Um*^2)^{1/2}$ und die feldorientierte Winkelkomponente $wuf* = \arctan Uw*/Um*$. Der Betrag U* des Spannungssollvektors ist dem Betragseingang des Steuersatzes zugeführt, während die zeitliche Ableitung d (wuf*)/dt des Winkels wuf* zusammen mit dem Ausgangssignal eines Winkelreglers W-REG dem Frequenzsteuereingang aufgeschaltet ist.

Die bisher geschilderte Steuerstrecke sorgt somit dafür, daß der Maschine M ein dem Betrag des feldorientierten Soll-Stromvektors entsprechender Strom eingeprägt wird. Die Phasenlage des Stromes wird vom Winkelregler W-REG so vorgegeben, daß der Lastwinkel-Istwert wif mit dem Lastwinkel-Sollwert, d.h. dem Stromwinkel-Sollwert wif*, der die Richtung des Strom-Sollvektors relativ zur Feldachse beschreibt, übereinstimmt. Während dieser feldorientierte Stromwinkel-Sollwert durch kartesisch/polare Koordinatenwandlung gemäß wif = arc tan (Iw*/Im*) aus den kartesischen Komponentensollwerten Im*, Iw* des feldorientierten Strom-Sollvektors gebildet werden kann, kann mittels eines an die Phasenleitungen der Drehstrommaschine angeschlossenen Stromdetektors I-DET nur der ständerorientierte Strom-Istwinkel erfaßt werden, d.h. der Winkel wis, den der Strom-Istvektor I der FIG 1 mit der Ständerachse A einschließt. Der Lastwinkel wif ist jedoch durch die Differenz des ständerorientierten Strom-Istwinkels wis und des Feldwinkels wfs bestimmt.

Dieser Feldwinkel soll nun ohne Verwendung von Meßsonden oder eines Maschinenmodells auf einfache Weise erfaßt werden. Hierzu wird mittels eines Spannungsdetektors U-DET an den Maschinenklemmen der ständerorientierte Spannungswinkel, d.h. der Winkel wus, den der Spannungs-Istvektor U der FIG 1 mit der Ständerachse A einschließt, erfaßt und von ihm der feldorientierte Spannungs-Sollwinkel wuf* subtrahiert (Additionsstelle AD1). Es ergibt sich also, daß dem Winkelregler W-REG am Eingang ein Rechenwerk mit zwei Sollwerteingängen und zwei Istwerteingängen vorgeschaltet ist, wobei ein Sollwerteingang von der Einstelleinrichtung für den feldorientierten Strom-Sollvektor mit wif*, der andere Sollwerteingang vom Entkopplungs-Rechenwerk CAL mit wuf* beaufschlagt ist, während den Istwert-Eingängen die beiden Istwinkel wus und wis der Detektoren U-DET und I-DET zugeführt sind.

Der Spannungsdetektor U-DET kann dabei häufig eingespart werden, wenn der entsprechende Istwinkel wus bereits am Steuersatz ST abgegriffen werden kann.

Im stationären Zustand ist der auf diese Weise berechnete Winkel wfs mit dem tatsächlichen Feldwinkel identisch. Bei dynamischen Vorgängen allerdings kann vorübergehend ein Orientierungsfehlwinkel auftreten. Insgesamt ergibt sich, daß eine hohe Ausnutzung der Maschine und des Umrichters sowie eine sehr genaue Einhaltung der stationär vorgegebenen Sollwerte erreicht wird.

Statt des Winkels wif* kann auch ein winkelähnlicher Sollwert, z.B. die feldsenkrechte Strom-Sollwertkomponente Iw* verwendet und dem Addierer AD3 im Addierwerk zugeführt werden. Dem Istwerteingang dieses Addierers AD3 ist dann der winkelähnliche Istwert Iw = $|I|$ . sin (wis) zuzuführen. Wird als Stromdetektor I-DET eine 3/2-Wandler, der die Meßwerte der Phasenströme in orthogonale Komponenten umwandelt, und ein nachgeschalteter kartesisch/polarer Koordinatenwandler verwendet, der den Betrag $|I|$ des Strom-Istvektors I errechnet, so kann aus wif und $|I|$ mittels eines multiplizierenden Sinus-Funktionsgebers der entsprechende Istwert gebildet werden.

Werden für die Regelung Mikrorechner eingesetzt, so ist allerdings die in FIG 3 gezeigte Variante meist vorteilhafter, da sich vektorielle Rechenoperationen digital besonders einfach in Polarkoordinaten durchführen lassen.

## Patentansprüche

1. Verfahren zur Bildung des Lastwinkel-Istwerts (wif) für die feldorientierte Regelung einer Drehfeldmaschine, **dadurch gekennzeichnet,** daß aus einem feldorientierten Spannungs-Sollvektor (Um*, Uw*) die Richtung (wuf*) des feldorientierten Spannungs-Sollvektors, aus der Winkeldifferenz (wus - wuf*) zwischen dem ständerorientierten Spannungs-Istvektor und dem feldorientierten Spannungs-Sollvektor der ständerorientierte Feldwinkel (wfs) und aus der Differenz des gemessenen ständerorientierten Winkels (wis) des Ständerstrom-Istvektors und des ständerorientierten Feldwinkels der Lastwinkel-Istwert (wif) gebildet wird.

2. Feldorientierte Regeleinrichtung für eine von einem Direktumrichter, einem Pulsumrichter oder einem anderen spannungseinprägenden Umrichter (PWR) gespeiste Drehfeldmaschine (M), mit
a) einer Eingabeeinrichtung für Bestimmungsgrößen (Im*, Iw*) eines feldorientierten Strom-Sollvektors,
b) einem nachgeschalteten Entkoppel-Rechenwerk (CAL), an dem Bestimmungsgrößen (U*, wuf*, d(wuf*)/dt) des zum eingegebenen Strom-Sollvektor gehörenden feldorientierten Spannungs-Sollvektors (Um*, Uw*) abgegriffen sind,
c) einen an die Maschine angeschlossenen Stromdetektor (I-DET) zur Erfassung eines Strom-Istvektors,
d) einer Regeleinrichtung (W-REG), die mit ihrem Sollwerteingang der Eingabeeinrichtung und mit ihrem Istwert-Eingang dem Stromdetektor nachgeschaltet ist, und
e) einem an das Entkopplungs-Rechenwerk (CAL) angeschlossenen Steuersatz (CAL) zur Steuerung des Umrichters (PWR),
**gekennzeichnet** durch ein Additionswerk (AD1, AD2, AD3), dem
– an einem mit der Eingabeeinrichtung verbundenen, ersten Istwert-Eingang ein feldorientierter Stromwinkel-Sollwert (wif*), der die Richtung des Strom-Sollvektors relativ zur Feldachse der Maschine beschreibt,

– an einem mit dem Entkopplungs-Rechenwerk (CAL) verbundenen, zweiten Sollwert-Eingang ein feldorientierter Spannungswinkel-Sollwert (wuf*), der die Richtung des Spannungs-Sollvektors relativ zur Feldachse beschreibt,

– an einem mit dem Stromdetektor (I-DET) verbundenen, ersten Istwerteingang ein ständerorientierter Stromwinkel-Istwert (wis), der die Richtung des Strom-Istvektors relativ zu einer Ständerachse beschreibt, und

– an einem mit dem Steuersatz (ST) oder mit einem Spannungsdetektor (U-DET) verbundenen, zweiten Istwert-Eingang ein ständerorientierter Spannungswinkel-Istwert (wus), der die Richtung des Spannungs-Istvektors relativ zur Ständerachse beschreibt,

zugeführt ist, und dessen Ausgangssignal als Regeldifferenz der Regeleinrichtung aufgeschaltet ist, wobei die Regeleinrichtung als Regler für den Stromwinkel, den Wirkstrom oder eine andere winkelbestimmende Größe ausgebildet ist und der Steuersatz mit dem Ausgang des Entkopplungs-Rechenwerkes (CAL) und dem Ausgang der Regeleinrichtung verbunden ist (FIG 3).

## Claims

1. A method for the formation of an actual load angle value (wif) for the field-orientated regulation of a rotating field machine, **characterised in that** the direction (wuf*) of the field-orientated desired voltage vector is formed from a fieldorientated desired voltage vector (Um*, Uw*), the stator-orientated field angle (wfs) is formed from the angular difference (wus - wuf*) between the stator-orientated actual voltage vector and the field-orientated desired voltage vector and the actual load angle (wif) is formed from the difference between the measured stator-orientated angle (wis) of the actual stator current vector and the stator-orientated field angle.

2. A field-oriented regulating device for a rotating field machine (M) fed by a direct a.c. converter, a pulse-controlled a.c. converter, or another converter (PWR) impressing a voltage, with

a) an input device for the determining variables (Im*, Iw*) of a field-orientated desired current vector,

b) a downstream isolating arithmetic unit (CAL), at which determining variables (U*, wuf*, d(wuf*)/dt) of the field-orientated desired voltage vector (Um*, Uw*) belonging to the input desired current vector are picked up,

c) a current detector (I-DET) connected to the machine for detecting an actual current vector,

d) a regulating device (W-REG), of which the desired value input is connected downstream of the input device and the actual value input is connected downstream of the current detector and

e) a triggering unit (CAL) connected to the isolating arithmetic unit (CAL) for controlling the converter (PWR),

**characterised** by an addition unit (AD1, AD2, AD3) to which is supplied

– at a first actual value input, connected to the input device, a field-orientated desired current angle value (wif*), which describes the direction of the desired current vector relative to the field axis of the machine,

– at a second desired value input, connected to the isolating arithmetic unit (CAL), a field-orientated desired voltage angle value (wuf*), which describes the direction of the desired voltage vector relative to the field axis,

– at a first actual value input, connected to the current detector (I-DET), a stator-oriented actual current angle (wis), which describes the direction of the actual current vector relative to a stator axis and

– at a second actual value input, connected to the triggering unit (ST) or to a voltage detector (U-DET), a stator-orientated actual voltage angle value (wus), which describes the direction of the actual voltage vector relative to the stator axis,

and the output signal of which is applied as regulating difference of the regulating device, wherein the regulating device is formed as regulator for the current angle, the active current or another angle-determining variable and the triggering unit is connected to the output of the isolating arithmetic unit (CAL) and the output of the regulating device (FIGURE 3).

## Revendications

1. Procédé pour former la valeur réelle (wif) de l'angle de charge pour la régulation, basée sur le champ, d'une machine à induction, **caractérisé par** le fait que la direction (wuf*) du vecteur de consigne de la tension, rapporté au champ, est formée à partir du vecteur de consigne de la tension (Um*, Uw*), rapporté au champ, que l'angle de champ (wfs), rapporté au stator, est formé à partir de la différence angulaire (wus-wuf*) entre le vecteur réel de la tension, rapporté au stator, et le vecteur de consigne de la tension, rapporté au champ, et que la valeur réelle (wif) de l'angle de charge est formée à partir de la différence entre l'angle mesuré (wis), rapporté au stator, du vecteur réel du courant statorique et l'angle de champ, rapporté au stator.

2. Dispositif de régulation rapporté au champ pour une machine à induction (M) alimentée par un mutateur direct, un mutateur à impulsions ou un autre mutateur (PWR) injectant une tension, comportant

a) un dispositif d'introduction pour des grandeurs fondamentales (Im*, Iw*) d'un vecteur de consigne du courant, rapporté au champ,

b) une unité de calcul de découplage (CAL) branchée en aval et dans laquelle sont prélevées les grandeurs fondamentales (U*, wuf*, d(wuf*)/dt) du vecteur de consigne de la tension (Um*, Uw*) rapporté au champ et associé au vecteur consigne de courant introduit,

c) un détecteur de courant (I-DET) raccordé à la machine et servant à détecter un vecteur réel du courant,

d) un dispositif de régulation (W-REG), dont l'entrée de la valeur de consigne est branchée en aval du dispositif d'entrée et dont l'entrée de la valeur réelle est branchée en aval du détecteur de courant, et

e) une unité de commande (CAL) raccordée à l'unité de calcul de découplage (CAL) et servant à commander le mutateur (PWR),

**caractérisé par** un circuit additionneur (AD1,AD2,AD3), dont

− une première entrée de valeur réelle, raccordée au dispositif d'entrée, reçoit une valeur de consigne (wif*) de l'angle du courant, rapportée au champ et décrivant la direction du vecteur de consigne de courant par rapport à l'axe du champ de la machine,

− une seconde entrée de valeur de consigne, raccordée à l'unité de calcul de découplage (CAL), reçoit une valeur de consigne (wufr*) de la tension, rapportée au champ et décrivant la direction du vecteur de consigne de la tension par rapport à l'axe du champ,

− une première entrée de valeur réelle, raccordée au détecteur de courant (I-DET) reçoit une valeur réelle (wis) de l'angle de courant, rapportée au stator et décrivant la direction du vecteur réel du courant par rapport à un axe du stator, et

− une seconde entrée de valeur réelle, raccordée à l'unité de commande (ST) ou à un détecteur de tension (U-DET), reçoit une valeur réelle (wus) de l'angle de la tension, rapportée au stator et décrivant la direction du vecteur réel de la tension par rapport à l'axe du stator,

et dont le signal de sortie est appliqué en tant que différence de régulation, au dispositif de régulation,

le dispositif de régulation étant agencé sous la forme d'un régulateur pour l'angle du courant, le courant actif ou une autre grandeur déterminant l'angle, et l'unité de commande étant raccordée à la sortie de l'unité de calcul de découplage (CAL) et à la sortie du dispositif de régulation (figure 3).

FIG 1

FIG 2

FIG 3